# EUROPEAN PATENT SPECIFICATION

(11) **EP 0 598 602 B1**
(45) Date of publication and mention of the grant of the patent: **19.03.1997**
(21) Application number: 93309164.7
(22) Date of filing: 17.11.1993
(51) Int. Cl.: F02D 41/40, F02D 41/14

(54) **An injection timing device for an electronic fuel injection system**
Einrichtung zur Verstellung des Förderbeginnes eines elektronischen Brennstoffeinspritzsystems
Dispositif de réglage d'avance pour un système d'injection électronique de carburant

(30) Priority: 19.11.1992 JP 333454/92
(43) Date of publication of application: 25.05.1994
(73) Proprietor: ZEXEL CORPORATION, Tokyo 150 (JP)
(72) Inventor: Sekiguchi, Akira, c/o Zexel Corporation, Higashimatsuyama-city, Saitama (JP)
(74) Representative: Kosmin, Gerald Emmanuel

(56) References cited:
- WO-A-90/11442
- US-A- 4 397 285
- US-A- 4 502 439
- PATENT ABSTRACTS OF JAPAN vol. 009, no. 029 (M-356)7 February 1985 & JP-A-59 173 531 (NIPPON DENSO KK) 1 October 1984
- PATENT ABSTRACTS OF JAPAN vol. 008, no. 224 (M-331)13 October 1984 & JP-A-59 105 943 (TOYOTA JIDOSHA KK) 19 June 1984
- PATENT ABSTRACTS OF JAPAN vol. 010, no. 047 (M-456)25 February 1986 & JP-A-60 198 358 (TOYOTA JIDOSHA KK) 7 October 1985
- PATENT ABSTRACTS OF JAPAN vol. 012, no. 195 (M-705)7 June 1988 & JP-A-63 001 745 (TOYOTA MOTOR CORP) 6 January 1988

## Description

The present invention relates to an injection timing device that controls the start timing for the fuel injection pump in an electronically controlled fuel injection system.

To adjust the injection timing for the fuel injection pump, the timer changes the relative contact position of the cam disk that effects the reciprocal movement of the plunger and the the roller, which is supported by a roller housing which, in turn, is linked to a timer piston. In recent models, the position of the timer piston is determined by a balance of force between the hydraulic pressure in the high-pressure chamber, that is adjusted with a timing control valve, and a spring that is housed in the low-pressure chamber. This timer piston position is detected by a timer position sensor that is consitituted, for example, by having the tip of the rod connected to the timer piston inserted into a solenoid.

However, when mounting a timer position sensor in the fuel injection pump, if the mounting precision is poor, the desired injection timing cannot be achieved. Also, the injection pump and the control unit that controls the pump are usually procured and installed separately. Thus, the accuracy of the injection timing, or lack therof, depends upon the combination of injection pump and control unit.

Because of this, in the prior art, in order to achieve specific injection timing characteristics, it has been necessary to mechanically adjust the output of the timer position sensor by providing a shim between the timer position sensor rod and the timer piston itself.

Known devices that perform this kind of output adjustment electrically are disclosed, for example, in Japanese Patent Unexamined Publication 59-105943 and Japanese Patent Unexamined Publication 59-173531. In these devices, after the mechanism is started up, a learning control for injection timing correction is performed for the specific mechanism operating conditions, such as, for example, in the idling state.

However, this requires a great deal of labour to mount each timer position sensor after making the adjustment with a shim. Naturally, in the above described method, the cost of production is high. Because of this, a system has been sought after in which mechanical adjustment with shims and the like can be eliminated and variances of the injection timing characteristics can be otherwise corrected. Also, in the system in which output adjustment is made electrically, as described above, the learning control for timing correction is implemented only under specific conditions. Therefore, although the system does support timing changes, if the mechanical adjustment is eliminated it is left to wait for a chance for correction with large deviations in the timing control.

In WO-A-9011442 an end position of an adjusting device, for example a diesel fuel injection pump, is determined by bringing it into the end position and storing the information as an index of the end position when the control parameter of the fuel pump reaches a predetermined value and/or this value is maintained for a predetermined length of time. There is disclosed one way of detecting the end position of the adjusting device which comprises:
(1) judging whether each control quantity reaches to a specific threshold or keeps its condition in the specific period;
(2) judging whether the adjusting device is in the area of the lower end position;
(3) judging whether the adjusting device is controlled towards the lower end position; and
memorising the update position of the adjusting device as the lower end position when the above qualifications are met.

US-A-4 502 439 discloses that the position of a timer piston in an electronically controlled diesel engine is determined on the basis of the output signal of the timer piston sensor and judging whether the position is abnormal.

It is an object of the present invention to provide an injection timing device for an electronic fuel injection system that requires no mechanical adjustment when mounting the timer position sensor and that can accurately correct the start of injection even when the mounting precision of the timer position sensor is poor or when there is an inconsistency in the control precision caused by certain conflicting combinations of control unit type and pump type.

Thus in accordance with the invention, there is provided an injection timing device of an electronic fuel injection system comprising:
a timer mechanism that determines the fuel injection start timing of a fuel injection pump from the position of a timer piston, the position of said timer piston being determined by adjusting the pressure that is applied to said timer piston with a timing control valve;
a timer piston position detecting means for detecting the actual position of said timer piston;
a calculation means capable of: (a) adjusting said fuel injection pump to a non-injection state and adjusting said timing control valve to a fully-open state, when a start switch for driving said fuel injection pump is turned on for the first time and when the rotation speed of said fuel injection pump is equal to or lower than a specified value; (b) detecting an actual position of timer piston after a specified time period has elapsed; and (c) calculating the difference between the detected actual position and a reference value of the timer piston as a learned value when the detected actual position is within a specified learning range;
a checking means for checking said learned value capable of:
   (a) calculating the discrepancy between the actual timer piston position and the reference position when the rotation speed of the fuel injection pump is not more than a specified value and when the timer piston is at a position where the injection timing is the most retarded and comparing the discrepancy with the learned value; and
   (b) if the difference between the discrepancy and the learned value is larger than a specified value, updating the learned value so as to correspond to the current calculated discrepancy; and
a control means for controlling said timing control valve by incorporating the learned value in order to correct the actual position of said timer piston.

Therefore, when the injection pump is operated for the first time, the actual position of the timer piston is detected and the discrepancy between the actual operating position and the reference position is learned. In the second operation and all subsequent operations, the timing control valve will be driven and controlled with the learned value incorporated as the correction amount for the actual position of the timer piston. Because of this, it is not necessary to go to any trouble when shipping out injection pumps to allow for assembly error in mounting the timer position sensor. Moreover, subsequent mechanical adjustment becomes unnecessary.

FIG. 1 shows an example of the schematic structure of the fuel injection pump according to the present invention.

FIG. 2 is an enlarged cross section illustrating the timer mechanism in the fuel injection pump according to the present invention.

FIG. 3 is a flow chart illustrating normal processing performed by the control unit.

FIG. 4 is a flow chart illustrating an example of the learning processing of the timer piston stroke performed by the control unit.

FIG. 5 is a flow chart illustrating an acual example of a learned value operation in the learning processing of the timer piston stroke illustrated in FIG. 4.

FIG. 6 is a flow chart illustrating an example of injection quantity control performed by the control unit of the electronic fuel injection system.

FIG. 7 is a flow-chart illustrating an example of injection timing control performed by the control unit of the electronic fuel injection system.

FIG. 8 is a conversion map illustrating the characteristics between the value obtained by subtracting the learned value (VTPS _ OFST) from the value measured by the timer position sensor (VTPS) and the control value of the timer piston stroke (TPSist).

FIG. 9 is a flow chart illustrating another example of the learning processing of the timer piston stroke performed by the control unit.

FIG. 10 is a flow chart illustrating an acual example of learning check processing in the learning processing of the timer piston stroke illustrated in FIG. 9.

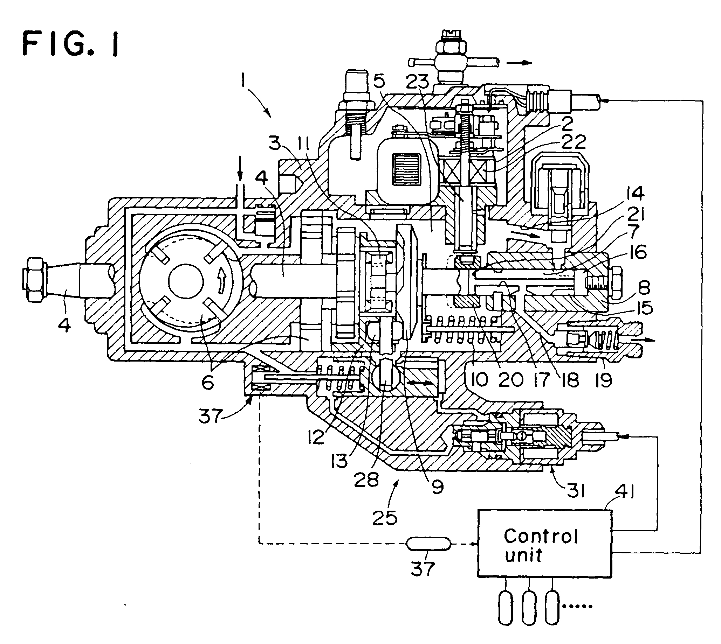

In FIG. 1, the fuel injection pump (1) is a distributor-type pump and is equipped with a housing (3) which is provided with an actuator (2) referred to as an electric governor. The drive shaft (4) is inserted at the center of the housing (3). One end of the drive shaft (4) exits the housing (3) to the outside so that it can receive drive torque from the engine (not shown in the figure). The other end of the drive shaft (4) extends into the chamber (5) within the housing (3) where it is linked with the feed pump (6). The fuel is supplied to the chamber (5) from the fuel tank (not shown in the figure) by the feed pump (6).

The plunger (7) is mounted in the plunger barrel (8) in such a way that it can slide freely. The base of the plunger (7) is fitted in full contact with the cam disk (9) and is pressed down tight by the plunger spring (10). The cam disk (9) is connected with the drive shaft (4) via the roller case (12) in such a way that it is free to travel in the direction of the shaft. At the same time, it is in full contact with roller (13) that is supported by the roller case (12). The mechanism is structured so that with the rotation of the cam disk (9), the plunger (7) is moved reciprocally to effect the intake and compression of fuel. At the same time, the plunger (7) is rotated in order to distribute the fuel.

During the intake phase, while the plunger (7) travels to the left in the figure, the fuel that is supplied to the chamber (5) from the fuel feed pump then enters the pump chamber (16) that is surrounded by the plunger barrel (8) and the plunger (7) via one of the intake grooves (15) which are formed extending from the intake port (14) in the direction of the tip of the plunger (5). During the compression phase, when the plunger travels to the right in the figure, communication between the intake port (14) and the intake grooves (15) is cut off and the fuel that is compressed in the pump chamber (16) enters one of the distributing passages (18) from the distribution port via the longitudinal channel (17) in the plunger (7). It is then sent to the injection nozzle via the delivery valve (19) to be injected into the combustion chamber of the engine.

Also, the control sleeve (20) is externally fitted on the portion of the plunger (7) that projects out from the plunger barrel (8) in such a manner that it slides freely and when the cut-off port (21) that communicates with the longitudinal channel (17) of the plunger (7) is open to the chamber (5) off the upper edge of the control sleeve, the compressed fuel flows out into the chamber (5) thereby stopping delivery of fuel to the injection nozzle and ending the injection. By adjusting the position of the control sleeve (20) in this manner, which determines the end of injection, the quantity of fuel injected can be adjusted. When the control sleeve (20) is moved toward the left in the figure, the injection quantity decreases and when it is moved to the right, the injection quantity increases.

The tip of the shaft (23), which is mounted in the rotor (22) of the actuator (2) is connected to the control sleeve (20). The tip of this shaft (23) is decentered in relation to the center of the shaft (23) with the result that the position of the control sleeve (20) is moved by the rotation of the rotor in the actuator (2).

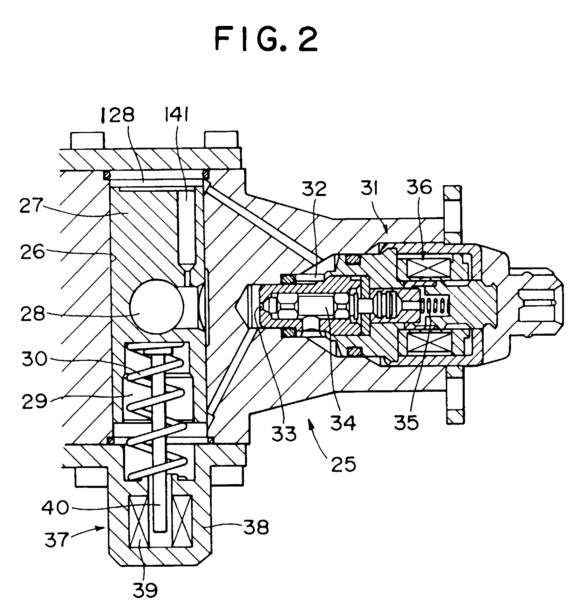

As shown in FIG. 2, the timer mechanism (25) is provided with a timer piston (27) which is housed in the cylinder (26) which, in turn, is provided below the aforementioned roller case (12) in such a manner that the timer piston (27) can slide freely. This timer piston (27) is linked with the roller case (12) via the lever (128) and the injection timing is adjusted by rotating the roller case (12) with the timer piston (27).

At one end of the timer piston (27), a high-pressure chamber (28) is provided where the compressed fuel inside the chamber is inducted via the restrictor passage (141). At the other end, a low-pressure chamber (29) is formed, which communicates with the intake passage of the feed pump. In addition, the low-pressure chamber (29) is structured in such a manner that it elastically accomodates the timer spring (30). Because of the timer spring (30), the timer piston (27) is always under applied force towards the high-pressure chamber. Therefore, the timer piston (27) stops at the position where the force of the timer spring (30) and the hydraulic pressure in the high-pressure chamber are in balance. When the pressure in the high-pressure chamber increases, the timer piston (27) travels towards the low-pressure chamber against the resistance of the timer spring (30), and the roller case (12) is rotated in the direction that advances the injection timing to effect the injection earlier. Also, when the pressure in the high-pressure chamber decreases, the timer piston (27) travels toward the high-pressure chamber and the roller case (12) is rotated in the direction that retards the injection timing to delay the injection.

At this point, the pressure in the high-pressure chamber (28) of the timer is adjusted with the timing control valve (TCV) (31) so as to obtain the required timer advance. The timing control valve (31) is provided with a fuel intake (32) on its side surface, which leads to the high-pressure chamber (28) and also a fuel outlet (33) at the tip, which leads to the low-pressure chamber (29). The timing control valve (31) is also provided with a needle (34) that opens and closes communication between the fuel intake (32) and the fuel outlet (33). This needle (34) is constantly under force from the spring (35) in the direction in which the communication between the fuel intake (32) and fuel outlet (33) is cut off. A force acting on the needle against the spring is provided by electricially powering the solenoid (36) to open communication between the fuel intake (32) and the fuel outlet (33).

Therefore, when there is no electric current running to the solenoid (36), the high-pressure chamber (28) and the low-pressure chamber (29) are completely cut off from each other. When there is elecric current running to the solenoid (36) the high-pressure chamber (28) and the low pressure chamber (29) are linked and the pressure in the high-pressure chamber (28) is thereby lowered. With this reduction of pressure in the high-pressure chamber (28), the timer piston (27) travels to a location where it is in balance with the spring force of the timer spring (30) and changes the injection timing.

Note that in practice, the pressure in the high-pressure chamber (28) is adjusted through duty ratio control of the timing control valve. This duty ratio is conrtolled by the control unit (41) and when the duty ratio is 0% the timing control valve is in the full open state and the injection timing is at its most retarded setting. With the duty ratio at 100%, the timing control valve (31) is in the full closed state and the injection timing is at its most advanced setting.

Also, the housing is provided with a timer position sensor (37) that may be located on the side of the low-pressure chamber, for example, which detects the timer piston position. This timer position sensor (37) consists of a detection coil (39) provided in the sensor main unit (38) and a rod (40) mounted on the timer piston (27) in such a way that it can travel inside the detection coil. The output signals from this timer position sensor (37) are sent to the control unit (41) to be processed.

The components of the control unit (41) are: a drive circuit that drives the aforementioned actuator (2) and the timing control valve (31), a microcomputer that controls the drive circuit, and an input circuit for inputting signals into the microcomputer. The microcomputer is provided with a central processing unit (CPU), memory elements E²PROM that are read and write capable, an A/D converter and so on. Apart from signals output from the aforementioned timer position sensor (37), information that is sent to the input circuit in the control unit (41) includes the rotation speed (N) of the engine, the axle position signal (AC) that indicates the amount of torque on the axle, the water temperature signal (TW) that indicates the temperature of the engine cooling water and the fuel temperature signal (TF) that indicates the temperature of the fuel. These signals are processed and the aforementioned actuator (2) and the timing control valve (31) are controlled and driven according to a specific program.

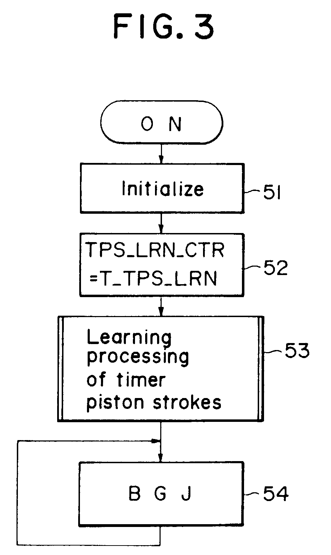

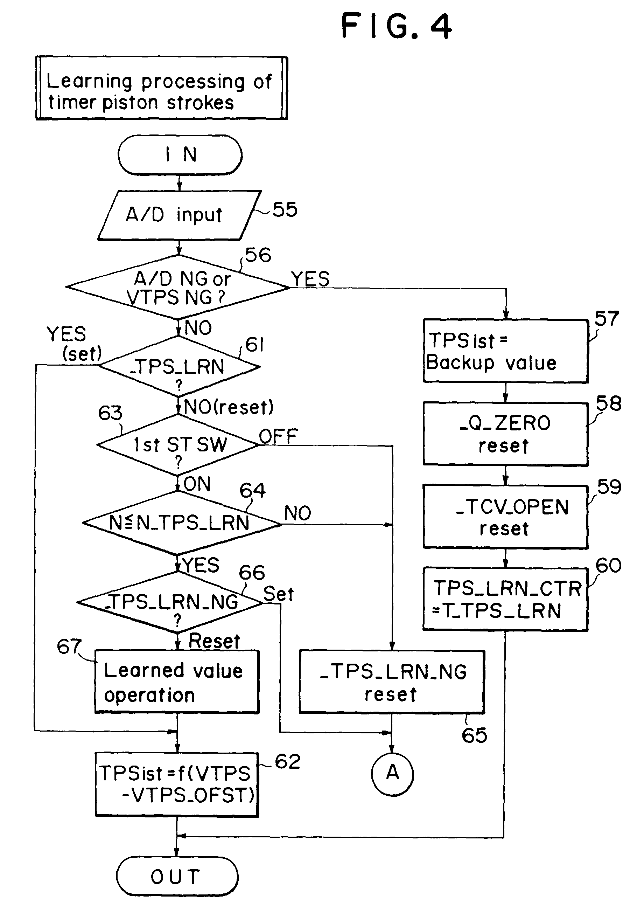

In FIG. 3, a normal processing performed by the control unit (41) is illustrated. The control unit (41) is initialized at the time of ignition power-up (step 51) and in the next step (52), it sets the learning counter (TPS_LRN_CTR), which will be explained later, at a specific initial value (T_TPS_LRN). In step (53) it executes the learning processing of the timer piston stroke as illustrated in FIG. 4. After that, it carries out various background jobs (BGJ) repeatedly (step 54). During the process of executing these background jobs, injection quantity control and injection start timing control are executed at specific intervals with priority.

In FIG. 4, the learning processing of the timer piston stroke is executed by first converting the analogue signals output from the various sensors of the injection pump 1 such as the value measured by the timer position sensor (37) (VTPS), which is then converted to a voltage, the axle position signal (AC), the water temperature signal (TW) and the fuel temperature signal (TF). These signals are converted sequentially into digital signals with the A/D converter and are input into the control unit (41) (step 55).

Next, in step 56, a decision is made as to whether or not the A/D converter itself has an error (NG) and whether or not the VTPS is an abnormal value (NG). If it is decided that there is an error (NG) in step 56, then, because it is disabled, the timer piston stroke learning is skipped and the operation proceeds to step 57 or to step 60. In this case, the actual control value for the timer piston stroke (TPSist) is set at the backup value, which is stored in memory in advance (step 57). The flag for setting the injection quantity in the no-injection state (_Q_ZWR0) is reset to prevent the operation from entering the no-injection state (step 58). Then the flag that sets the timing control valve (31) to full open (_TCV_OPEN) is reset to prevent the timing control valve from entering the full open state (step 59). The learning counter (TPS_LRN_CTR) is also set to the initial value (T_TPS_LRN) (step 60).

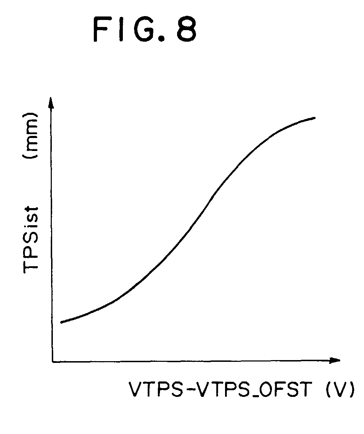

On the other hand, if the decision made in step 56 is that there is no error, the operation proceeds to step 61 to decide whether or not the the timer piston stroke learning has already been performed. In other words, at this point, it is decided whether or not the decision flag for learning completed (_TPS_LRN) is set (learning performed) or reset (learning not performed). If the result of the decision made in step 61 is that learning has been completed, the operation proceeds to step 62 and the control value for the timer piston stroke (TPSist) is obtained with the conversion map given in FIG. 8 using two-dimensional interpolation based on the value that is the actual measured value from the timer position sensor (VTPS) minus the learned value (VTPS_OFST).

If the decision is made that learning has not yet been performed, the operation proceeds to steps 63 and 64. In step 63, a decision is made as to whether or not the start switch has been turned on for the first time and in step 64 a decision as to whether or not the rotation rate of the pump (N) is equal to or lower than a specfic value (N_TPS_LRN). If the starter has started turning even if the start switch was not turned on (forced etc.), or if the engine is rotating at a high speed for some reason, the operation proceeds to step 67 even though learning has not been performed and the learning disable flag (_TPS_LRN_NG), which indicates that the learning is disabled, is reset and learned value setting processing, which will be explained later, is performed.

If the start switch has been turned for the first time and the rotation rate of the pump is at the specified value or lower, the operation proceeds to step 66 to make a decision as to whether or not the learning disable flag is set. At this point, if the decision is that the learning disable flag is set, it means that learning cannot be performed. The operation then proceeds to the learned value setting processing, to be explained later. If it is decided to be reset, the learned value operation is performed (step 67) and with the learned value obtained in this step, the timer piston stroke, which is used for the control performed in step 62, is calulated.

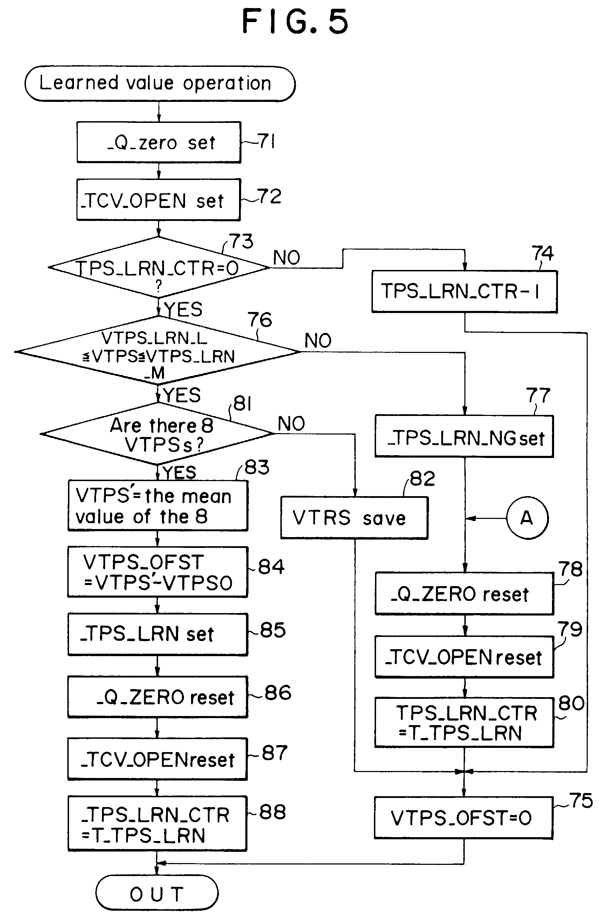

The following is an actual processing example of a learned value operation performed in step 67 in reference to FIG. 5. First, in step 71, the flag for setting the injection quantity in the no-injection state (_Q_ZWRO) is set, forcibly cutting the injection quantity to zero. Also, the full-open flag for the timing control valve (_TCV_OPEN) is set, fully opening the timing control valve (step 72).

Next, in step 73, a decision is made as to whether or not the learning counter (TPS_LRN_CTR) has reached 0 by counting down from the initial value (T_TPS_LRN) and if it is decided that the learning counter is not 0, the operation proceeds to step 74 to decrement the learning counter by 1 and in step 75 the learned value (VTPS_OFST) is set to 0, and so on, until the learning counter reaches 0. During this time, learning is suspended until the learning counter is down to 0 because there is a danger that the movement of the timer piston (27) could be impeded depending on the relative positions of the cam disk (9) and the roller (13). Therefore, if the cam disk (9) is a mechanism serving four cylinders, it turns by 45° and waits for the timer piston (27) to complete its movement to the fully retarded position. Because of this, the initial value (T_TPS_LRN) for the learning counter (T_TPS_LRN_CTR) must be a value which allows the learning to be delayed sufficiently until the cam disk (9) has made the 45° rotation.

If a decision is made in step 73 that the learning counter is down to 0, the operation proceeds to step 76. In this step, a decision is made as to whether or not the measured value of the timing position sensor (37) (VTPS) falls within a specified range and is in a position where normal learning can be performed. At this point, if it is decided that the value is not within the learning range, the operation proceeds to step 77 and the learning disable flag (_TPS_LRN_NG) is set. Also, the flag for setting the injection quantity in the no-injection state (_Q_ZERO) is reset to prevent it entering into the no-injection state as in step 58 and step 60 (step 78). Then the flag for fully opening the timing control valve (_TCV_OPEN) is reset to avoid fixing the timing control valve in the full open state (step 79). Also, the learning counter (TPS_LRN_CTR) is set at the initial value (T_TPS_LRN) (step 80). After that, the learned value is set to 0 in step 75 and the control value for the stroke is determined based upon that value.

In contrast, if it is decided in step 76 that the value is within the learning range, then a decision is made as to whether or not there are eight measured values (VTPS) from the timer position sensor (step 81). The values obtained from the timer position sensor are saved in a specified area in the E²PROM (step 82) until there are eight measured values. Then, the mean value is calculated from these eight values, as VTPS' (step 83) and the difference between the mean value and the pre-stored reference value (VTPS0) is caluclated and designated as the learned value (VTPS_OFST) (step 84). Then, the decision-flag for learning completed (_TPS_LRN) is set, and the operation enters the learning-performed state (step 85). Then, as in steps 58 and 60, the flag for setting the injection quantity in the no-injection state (_Q_ZERO) is reset to prevent the operation from entering into the no-injection state (step 86) and the flag for fully opening the timing control valve (_TCV_OPEN) is reset to avoid fixing the timing control valve in the full open state (step 87). Also, the learning counter (TPS_LRN_CTR) is set at the initial value (T_TPS_LRN) (step 88).

To summarize the processing described above, the conditions for starting the learning are: that learning has not yet been performed, that the timer position sensor is functioning normally, that the start switch has been turned on for the first time, and that the rotation speed of the pump is at the specified rotation speed or lower. As for the learning method; the difference between the mean value of the eight VTPs and the reference value is used as the learned value when the operation is set to the no-injection state, the TCV is set to the full open state (the duty ratio is set to 0%) and the VTPS is within a specified learning range when a specific time period (T_TPS_LRN) has elapsed. This learned value is stored in the E²PROM to be used for the subsequent injection timing control. Here, the required learning time is the period of time elapsing until the learning counter is down to 0. That is, the total elapsed time until the pump makes a 45° turn and there are eight VTPS values ready. This required learning time is approximately from 0.6 to 0.7 seconds when the rotation speed of the pump is set to 60 rpm. The learning described above is performed only when the start switch is turned on for the first time and in all subsequent operations of the start switch, the learned value already stored in the E²PROM in the initial learning is used as a correction factor for the injection timing control. The result is that the fuel cut time is eliminated making it possible to perform injection timing control immediately. In this embodiment, if the VTPS does not fall within the specified learning range during the learning period, learning processing is halted with a learning error. In this case, the learned value is set to 0, the operation is set into learning-not-yet-performed state, and it is repeated.

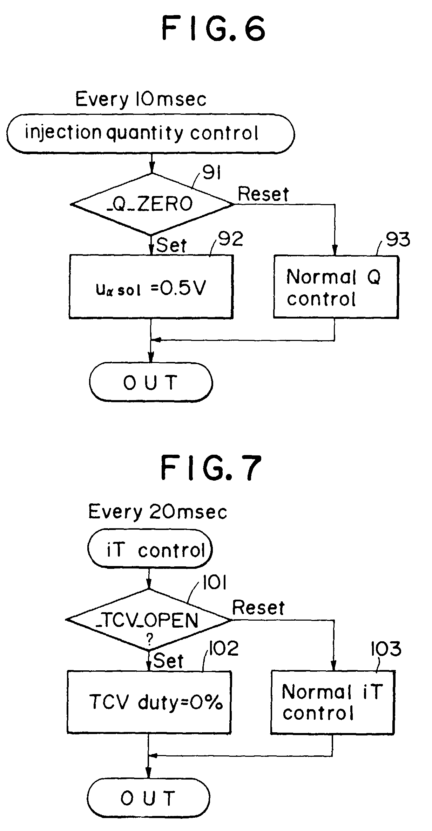

Next, injection quantity control and injection timing control which have priority over and interrupt the execution of background jobs, are explained. The injection quantity control, as shown in FIG. 6, is executed every 10msec and it decides in step 91 whether or not the flag for setting the injection quantity in the no-injection state (Q_ZERO) is set. If the flag for setting the quantity in the no-injection state is set during the learning processing, the operation proceeds to step 92 and the target control sleeve position voltage (Uaist) required for obtaining the target injection quantity is set at a value within the fuel cut zone, for example, 0.5V. In contrast, if the flag for setting the quantity in the no-injection state is reset, the operation proceeds to step 93 and normal injection quantity control is performed. The normal injection quantity control as referred to here involves first calculating a target injection quantity based on the idle characteristics map, which is used for maintaining the target idle rotation rate, against load variations while idling, an operating characteristics map for normal operation, a full Q characteristics map that calculates the maximum injection quantity (full Q) that is allowed by the performance of the engine, the start-up characteristics map that calculates the ideal injection state for good start up at the time of engine start up and the like. Then, this target injection quantity is corrected based on the fuel temperature, and after that it is converted to the control sleeve target position signal UaSOL . This control is performed so that the optimum state of injection is supplied in various operating conditions.

The injection timing control is executed every 20msec as shown in FIG. 7. In step 101, a decision is made as to whether or not the flag for fully opening the timing control valve (31) (_TCV_OPEN) is set. If this flag has been set in the learning processing, the valve is fully opened with the duty ratio of the current supplied to the timing control valve set to 0% in order to delay the injection timing condition as much as possible (step 102). If, on the other hand, the flag for fully opening the timing control valve has been reset, the operation proceeds to step 103 to perform normal injection timing control. The normal injection control as referred to here, is a control for optimizing the fuel injection timing according to the engine operating conditions based on the control value for the timer piston stroke (TPSist) obtained in the aforementioned step 57 or step 62.

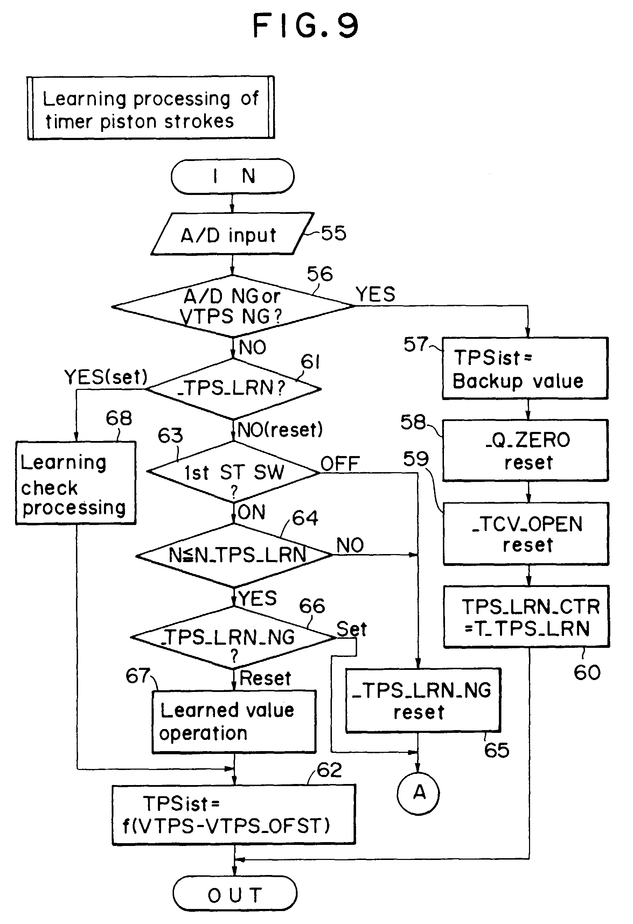

It should be noted that in the embodiment described above, the learning processing of the timer piston stroke is executed only when the engine switch is turned on for the first time. Because of this, the system cannot cope with situations such as when output from the timer position sensor (37) changes over time. In FIG. 9, another embodiment that deals with this difficulty is shown. The following is an explantion of the differences from the first embodiment; the same key component numbers are assigned to identical parts and explanation of those parts is omitted.

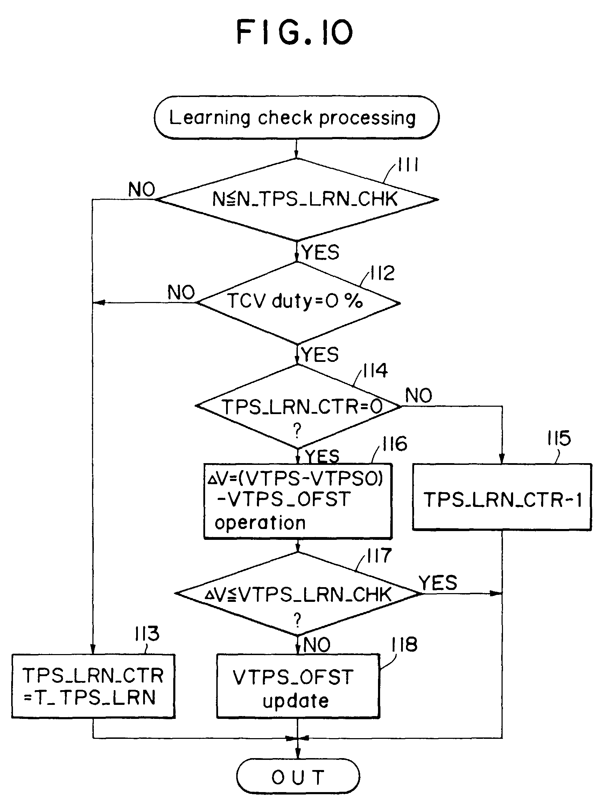

In FIG. 9, if it is decided in step 61 that learning has already been performed, the operation proceeds to step 68 in order to perform check processing of the learned value for the timer piston stroke. FIG. 10 shows an actual example of this processing. In step 111, a decision is made as to whether or not the rotation speed (N) of the pump is down to the specified value or lower (N_TPS_LRN_CHK) during the operation of the pump. In step 112, a decision is made whether or not the timing control valve (31) is in the full open state with the duty ratio set to 0%. In the prior art, in order to correct for changes over time, the rotation speed of the pump is forcibly lowered to the point where it is equal to or lower than a specific number of revolutions to set the timing control valve in the full open state. However, in this embodiment, as the operating conditions change, compensation is effected only when the above conditions are met.

If it is decided, in step 111 that the rotation speed for the pump is higher than the specified value, or if it is decided in step 112 that timing control valve (31) is not in the full open state, it means the timing is not right for correcting the learned value and the operation proceeds to step 113 to set the learning counter (_TPS_LRN_CTR) to the initial value (T_TPS_LRN). If, on the other hand, the rotation speed of the pump comes down to the point where it is equal to or lower than the specified number during control and at the same time, the timing control valve enters full open state, a decision is made in step 114 as to whether or not the learning counter has arrived at 0 by counting down from the initial value. If it is decided that the learning counter is not at 0, the learning counter is decremented by 1 (step 115) and the learned value (VTPS_OFST) is maintained without change until the counter is down to 0. When it is decided that the learning counter has reached 0, the difference (ΔV) between the discrepancy ((VTPS - VTPS0) of the measured value of the timer position sensor (37) (VTPS) and the reference value (VTPS0)) and the learned value ((VTPS_OFST) which has already been obtained through learning), is calculated (step 116) and a decision is made as to whether this difference (?V) is equal to or less than the specified value (VTPS_LRN_CHK) (step 117). If this difference is equal to or less than the specified value, it means that there has been no change over the elapsed time or, if there has been any change, it is insignificant enough to disregard and the learned value is not updated. However, if the difference is larger than the specified value, the operation proceeds to step 118 to update the learned value (VTPS_OFST) with a new VTPS - VTPS0.

Therefore, in this embodiment, the amount of correction is determined when the start switch is turned on for the first time, and can be adjusted against changes over time, resulting in more accurate injection timing control.

As has been described above, according to the present invention, when the injection pump is operated for the first time, the discrepancy between the actual position of the timer piston and the reference position is learned, and after that, the timing control valve is controlled by incorporating this learned value into the actual position of the timer piston. Therefore, the timer position sensor requires no mechanical adjustment when it is mounted and even if the mounting accuracy of the timer position sensor is poor, or when there is a control error introduced by the combination with a certain control unit, the injection start timing can be accurately corrected. As a result, much of the difficulty in production can be eliminated and the cost of producing the fuel injection system can be reduced.

## Claims

1. An injection timing device of an electronic fuel injection system comprising:
a timer mechanism (25) that determines the fuel injection start timing of a fuel injection pump (1) from the position of a timer piston (27), the position of said timer piston (27) being determined by adjusting the pressure that is applied to said timer piston (27) with a timing control valve (31);
a timer piston position detecting means for detecting the actual position of said timer piston (27);
a calculation means capable of:
(a) adjusting said fuel injection pump (1) to a non-injection state (step 71) and adjusting said timing control valve (31) to a fully-open state (step 72), when a start switch for driving said fuel injection pump (1) is turned on for the first time (step 63) and when the rotation speed of said fuel injection pump (1) is equal to or lower than a specified value (step 64);
(b) detecting an actual position of timer piston (27) (step 55) after a specified time period has elapsed (step 73); and
(c) calculating the difference between the detected actual position and a reference value of the timer piston (27) as a learned value (step 84) when the detected actual position is within a specified learning range (step 76);
a checking means (step 68) for checking said learned value capable of:
(a) calculating (step 116) the discrepancy between the actual timer piston position and the reference position when the rotation speed of the fuel injection pump (1) is not more than a specified value (step 111) and when the timer piston (27) is at a position where the injection timing is the most retarded (step 112) and comparing the discrepancy with the learned value (step 117); and
(b) if the difference between the discrepancy and the learned value is larger than a specified value, updating (step 118) the learned value so as to correspond to the current calculated discrepancy; and
a control means (step 62) for controlling said timing control valve (31) by incorporating the learned value in order to correct the actual position of said timer piston (27).

2. An injection timing device as claimed in Claim 1, wherein said timer piston position detecting means is a timer position sensor (37) which comprises a rod (40) mounted on said timer piston (27), and a detection coil (39), said rod (40) being capable of travelling through the detection coil (39).

3. An injection timing device as claimed in Claim 1 or 2, wherein when the output from said timer piston position detecting means is an erroneous value (step 56), said timer piston is set to a specific position that has been stored in memory in advance to avoid non-injection state (step 57).

4. An injection timing device as claimed in Claim 1, 2 or 3, wherein said calculation means further comprises:
when the start switch is not turned on for the first time (step 63), when the actual position of the timer piston is not abnormal (step 56) and is not within the specified learning range (step 76) or when the rotation speed of the fuel injection pump is equal to or more than a specific value (step 64), setting the learned value to 0 to avoid fixing the non-injection state or the full-open state of the timing control valve (step 75).

5. An injection timing device as claimed in Claim 1, 2, 3 or 4, wherein the actual position of said timer piston is the mean value of a plurality of values detected by the timer piston position detecting means (steps 81, 83).

## Patentansprüche

1. Vorrichtung zur Einspritzsteuerung eines elektronischen Kraftstoffeinspritzsystems umfassend:
einen Steuermechanismus (25), der den Kraftstoff-Einspritzzeitpunkt einer Kraftstoffeinspritzpumpe (1) abhängig von der Position eines Steuerkolbens (27) bestimmt, wobei die Position des Steuerkolbens (27) durch die Einstellung des Drucks bestimmt wird, der an den Steuerkolben (27) mittels eines Steuer-Kontrollventils (31) angelegt wird;
eine Steuerkolben-Positionserfassungseinrichtung zur Erfassung der aktuellen Position des Steuerkolbens (27);
eine Recheneinrichtung zur:
a) Einstellung der Kraftstoffeinspritzpumpe (1) in einen Nicht-Einspritzzustand (Schritt 71) und zur Einstellung des Steuer-Kontrollventils (31) in einen vollständig geöffneten Zustand (Schritt 72), wenn ein Startschalter zum Antreiben der Kraftstoffeinspritzpumpe (1) zum ersten Mal eingeschaltet wird (Schritt 63) und wenn die Rotationsgeschwindigkeit der Kraftstoffeinspritzpumpe (1) gleich oder kleiner als ein bestimmter Wert ist (Schritt 64);
b) Erfassung einer aktuellen Position des Steuerkolbens (27) (Schritt 55), nachdem eine bestimmte Zeitspanne vergangen ist (Schritt 73); und
c) Berechnung der Differenz zwischen der erfaßten aktuellen Position und einem Referenzwert des Steuerkolbens (27) als erlerntem Wert (Schritt 84), wenn die erfaßte aktuelle Position innerhalb eines bestimmten Lernbereichs (Schritt 76) liegt;
eine Prüfeinrichtung (Schritt 68) zum Überprüfen des erlernten Werts zur:
a) Berechnung (Schritt 116) der Diskrepanz zwischen der aktuellen Steuerkolbenposition und der Referenzposition, wenn die Rotationsgeschwindigkeit der Kraftstoffeinspritzpumpe (1) einen bestimmten Wert nicht mehr hat (Schritt 111) und wenn der Steuerkolben (27) in einer Position ist, in der die Einspritzsteuerung am stärksten verzögert ist (Schritt 112), und zum Vergleichen der Diskrepanz mit dem erlernten Wert (Schritt 117); und
b) Aktualisierung des erlernten Werts (Schritt 118), wenn die Differenz zwischen der Diskrepanz und dem erlernten Wert größer als ein bestimmter Wert ist, um der momentan berechneten Diskrepanz zu entsprechen; und
eine Kontrolleinrichtung (Schritt 62) zur Steuerung des Steuer-Kontrollventils (31), in dem der erlernte Wert aufgenommen wird, um die aktuelle Position des Steuerkolbens (27) zu korrigieren.

2. Vorrichtung zur Einspritzsteuerung nach Anspruch 1, wobei die Steuerkolben-Positionserfassungseinrichtung ein Steuer-Positionssensor (37) ist, der einen Stab (40), der auf dem Steuerkolben (27) befestigt ist, und eine Detektionsspule (39) umfaßt, und sich der Stab (40) innerhalb der Detektionsspule (39) bewegen kann.

3. Vorrichtung zur Einspritzsteuerung nach einem der Ansprüche 1 oder 2, wobei der Steuerkolben in eine bestimmte Position versetzt wird, die zuvor in einem Speicher gespeichert wurde, um den Nicht-Einspritzzustand (Schritt 57) zu vermeiden, wenn die Ausgabe der Steuerkolben-Positionserfassungseinrichtung ein fehlerhafter Wert ist (Schritt 56).

4. Vorrichtung zur Einspritzsteuerung nach einem der Ansprüche 1, 2 oder 3, wobei die Recheneinrichtung des weiteren umfaßt:
die Einstellung des erlernten Werts auf Null, um das Fixieren des Nicht-Einspritzzustands oder des vollständig geöffneten Zustands des Steuer-Kontrollventils (Schritt 75) zu vermeiden, wenn der Startschalter nicht zum Ersten Mal eingeschaltet ist (Schritt 63), wenn die aktuelle Position des Steuerkolbens nicht abnormal ist (Schritt 56) und nicht innerhalb eines bestimmten Lernbereichs (Schritt 76) liegt, oder wenn die Rotationsgeschwindigkeit der Kraftstoffeinspritzpumpe gleich oder höher als ein bestimmter Wert ist (Schritt 64).

5. Vorrichtung zur Einspritzsteuerung nach einem der Ansprüche 1, 2, 3 oder 4, wobei die aktuelle Position des Steuerkolbens der Durchschnittswert mehrerer Werte ist, die von der Steuerkolben-Positionserfassungseinrichtung erfaßt wurden (Schritte 81, 83).

## Revendications

1. Dispositif régulateur d'injection d'un système d'injection de carburant électronique, comprenant :
un mécanisme de temporisation (25) qui détermine le temps de démarrage d'injection de carburant d'une pompe d'injection de carburant (1) à partir de la position d'un piston de temporisation (27), position dudit piston de temporisation (27) qui est déterminée par réglage de la pression appliquée à celui-ci à l'aide d'une soupape de commande de temporisation (31);
un moyen détecteur de position de piston de temporisation servant à détecter la position réelle dudit piston de temporisation (27);
un moyen de calcul capable de :
(a) régler ladite pompe d'injection de carburant (1) sur un état de non injection (étape 71) et ladite soupape de commande de temporisation (31) sur un état complètement ouvert (étape 72), lorsqu'un commutateur de démarrage destiné à commander ladite pompe d'injection de carburant (1) est mis en circuit pour la première fois (étape 63) et que la vitesse de rotation de ladite pompe d'injection de carburant (1) est égale ou inférieure à une valeur spécifiée (étape 64);
(b) détecter une position réelle du piston de temporisation (27) (étape 55) après qu'une période de temps spécifiée s'est écoulée (étape 73); et
(c) calculer la différence entre la position réelle détectée et une valeur de référence du piston de temporisation (27), qui sert de valeur apprise (étape 84) lorsque la position réelle détectée se situe à l'intérieur d'une plage d'apprentissage spécifiée (étape 76);
un moyen de contrôle (étape 68) servant à contrôler la valeur apprise, capable de :
(a) calculer (étape 116) l'écart entre la position réelle du piston de temporisation et la position de référence lorsque la vitesse de rotation de la pompe d'injection de carburant (1) n'est pas supérieure à une valeur spécifiée (étape 111) et que le piston de temporisation (27) occupe une position dans laquelle le temps d'injection est le plus retardé (étape 112), et comparer l'écart avec la valeur apprise (étape 117); et
(b) si la différence entre l'écart et la valeur apprise est supérieure à une valeur spécifiée, actualiser (étape 118) la valeur apprise afin qu'elle corresponde à l'écart calculé du moment; et
un moyen de commande (étape 62) servant à commander ladite soupape de commande de temporisation (31) par intégration de la valeur apprise afin de corriger la position réelle dudit piston de temporisation (27).

2. Dispositif régulateur d'injection, tel que défini dans la revendication 1, dans lequel ledit moyen détecteur de position du piston de temporisation est un capteur de position de temporisation (37) comprenant une tige (40) montée sur ledit piston de temporisation (27), et une bobine de détection (39), ladite tige (40) étant capable de se déplacer à travers la bobine de détection (39).

3. Dispositif régulateur d'injection, tel que défini dans la revendication 1 ou 2, dans lequel lorsque la sortie dudit moyen détecteur de position du piston de temporisation est une valeur erronée (étape 56), ledit piston de temporisation est réglé sur une position spécifique qui a été mise en mémoire à l'avance pour éviter un état de non injection (étape 57).

4. Dispositif régulateur d'injection, tel que défini dans la revendication 1, 2 ou 3, dans lequel ledit moyen de calcul comprend également :
lorsque le commutateur de démarrage n'est pas mis en circuit pour la première fois (étape 63), lorsque la position réelle du piston de temporisation n'est pas anormale (étape 56) et ne se situe pas à l'intérieur de la plage d'apprentissage spécifiée (étape 76) ou lorsque la vitesse de rotation de la pompe d'injection de carburant est égale ou supérieure à une valeur spécifique (étape 64), le réglage de la valeur apprise sur 0 pour éviter d'établir l'état de non injection ou l'état complètement ouvert de la soupape de commande de temporisation (étape 75).

5. Dispositif régulateur d'injection, tel que défini dans la revendication 1, 2, 3 ou 4, dans lequel la position réelle dudit piston de temporisation représente la moyenne de plusieurs valeurs détectées par le moyen détecteur de position du piston de temporisation (étapes 81, 83).
